Europäisches Patentamt

European Patent Office

Office européen des brevets

(11) Publication number: **0 178 283 B1**

(12) **EUROPEAN PATENT SPECIFICATION**

(45) Date of publication of patent specification: **18.12.91**     (51) Int. Cl.⁵: **C08J 9/06**, C08L 23/12

(21) Application number: **85870137.8**

(22) Date of filing: **07.10.85**

(54) **Rigid material of expanded polypropylene and process for preparing the same.**

(30) Priority: **08.10.84 LU 85576**

(43) Date of publication of application:
**16.04.86 Bulletin 86/16**

(45) Publication of the grant of the patent:
**18.12.91 Bulletin 91/51**

(84) Designated Contracting States:
**BE DE FR GB IT NL**

(56) References cited:
**DE-A- 2 251 759**
**FR-A- 2 532 652**
**GB-A- 1 202 835**

**JOURNAL OF POLYMER SCIENCE: POLYMER
LETTERS EDITION, vol. 21, 1983, pages
347-351, JOHN WILEY & SONS, INC., New
York, US; "Heterogeneous nucleation stud-
ies on polypropylene"**

**CHEMICAL ABSTRACTS, vol. 101, no. 22, 26th
November 1984, page 42, abstract no.
193087u, Columbus, Ohio, US**

(73) Proprietor: **MONTEFINA S.A.**
**Zone Industrielle C**
**B-7181 Feluy(BE)**

(72) Inventor: **Bertrand, Jean-Noel**
**Clos Saint-Georges 2**
**B-1970 Wezembeek-Oppem.(BE)**

(74) Representative: **Detrait, Jean-Claude et al**
**FINA RESEARCH S.A. Zone Industrielle C**
**B-7181 Feluy(BE)**

## Description

The present invention relates to rigid materials made of expanded polypropylene, and more particularly to rigid articles made of expanded crystalline polypropylene. The present invention also concerns a process for preparing said rigid materials which are characterized by improved physical properties.

The terms "rigid materials" or "rigid articles" mean tubes, as well as sheets of plates or even boards which are obtained by extrusion, together with various articles manufactured from the sheets, for instance by thermoforming of these sheets.

Expanded polypropylene offers many advantages with respect to the non-expanded polypropylene. It is known that articles made of expanded polypropylene give a gain of weight which may reach from 20 to 25 %. Moreover, the printing operation on expanded polypropylene may easily be carried out without requiring to a pretreatment of the surface to be printed.

However, the articles presently manufactured with expanded polypropylene have certain drawbacks. Indeed, their mechanical resistance is not very high and therefore many objects, for instance containers, are easily deformable. On the other hand, the specific gravity of the rigid materials made of expanded polypropylene is not always homogeneous and often presents from a point to another, variations which may reach about 10%.

These drawbacks constitute a limitation for the commercial development of expanded polypropylene products. It is therefore a need to possess rigid materials made of expanded polypropylene and having better qualities and properties.

An object of the present invention is to provide rigid materials made of expanded polypropylene the mechanical properties of which being improved.

Another object of the present invention is to provide rigid materials made of expanded polypropylene which have a high crystallization temperature.

Still another object of the present invention is to provide rigid materials made of expanded crystalline polypropylene having a uniform specific gravity.

In accomplishing the foregoing objects, there is provided rigid materials made of expanded polypropylene which are characterized by (i) a uniform specific gravity d comprised between $4.18 \times 10^{-4}$ g/mm$^3$($4.1 \times 10^{-6}$ Newton/mm$^3$) and $8.26 \times 10^{-4}$ g/mm$^3$ ($8.1 \times 10^{-6}$ Newton/mm$^3$), (ii) a crystallization temperature comprised between 115 and 135°C and (iii) a flexural modulus Mf expressed in g'/mm$^2$ such that the ration Mf : d is comprised between $1.50 \times 10^8$ and $1.70 \times 10^8$.

The rigid materials of the present invention may be obtained from a composition which essentially comprises isotactic polypropylene, an agent which modified the crystallization speed, a blowing agent and optionally a nucleating agent which is acting at the expansion level.

While the rigid materials of the present invention may be prepared from a copolymer of propylene and a minor amount of an alpha-olefin which may have up to 6 carbon atoms, it is preferable to use an isotactic homopolymer, the articles obtained from said homopolymer having better physical properties. In order to increase the number of crystallization nuclei in the polypropylene, an agent which modifies and increases the crystallization speed is introduced and dispersed. This agent is generally used in an amount which may vary between 500 ppm and 5000 ppm, calculated on the weight of polymer. By way of examples to agents improving the crystallization speed, it may be cited dibenzilidene sorbitol, sodium bis(4-tert-butylphenol)-phosphate, sodium benzoate, or still a mixture comprising a monocarboxylic aromatic acid or a polycarboxylic aliphatic acid and a silicate or an alumino-silicate of a metal of Group I or II of the Periodic System. This type of crystallization agent is described in the European Patent Application N° 85968 filed in the name of the Applicant.

The blowing agent may be of the type generally used for the production of expanded polypropylene. By way of examples, it may be cited citric acid, mixtures of citric acid and bicarbonate of alkali metal or ammonium, azodicarbonamide, diazoaminobenzene, azo-bis-isobutyronitrile and analogs. The blowing agent may comprise one or more additives as for instance an agent reducing its decomposition temperature.

The amount of blowing agent to be used depends on its nature and on the desired density for the expanded polypropylene. Said amount is generally comprised between about 0.2 and 0.7 part for 100 parts by weight of polymer, and it can easily be determined by those skilled in the art. However, it has been noted that, with the same amount of blowing agent, the density of a rigid expanded material of the present invention is lower than that of a similar material obtained from polypropylene which does not contain any agent improving the crystallization speed.

In order to reduce the mean size of the cells formed in the expanded polypropylene, it may be advantageous also to incorporate a nucleating agent into the polymer, said nucleating agent acting at the expansion level. Generally, said agent consists in a solid inorganic matter which is finely divided. Owing to said additive, the blowing agent forms cells which are finely and uniformly dispersed within the polymer.

The compositions may also contain the usual additives, as for instance, colouring drying agents, fire-proofing agents, antioxydant or antistatic agents.

These compositions allow to prepare, by means of usual processes well known to the skilled in the art worker, the rigid materials the density of which is comprised between $4.18 \times 10^{-4}$ g/mm$^3$ ($4.1 \times 10^{-6}$ Newton/mm$^3$) and $8.26 \times 10^{-4}$ g/mm$^3$ ($8.1 \times 10^{-6}$ Newton/mm$^3$), depending on the amount of blowing agent which is used. Preferably, the density of the sheets, plates or boards is comprised between about $5.61 \times 10^{-4}$ g/mm$^3$ ($5.5 \times 10^{-6}$ Newton/mm$^3$) and $7.65 \times 10^{-4}$ g/mm$^3$ ($7.5 \times 10^{-6}$ Newton/mm$^3$). It has been noted that the rigid materials which are obtained have a uniform density, the variations from a point of the material to another one not exceeding about 2 or 3%.

The materials of the invention made of expanded crystalline polypropylene are also characterized by a high crystallization rate, which results from a high crystallization speed. This property is determined by measuring the crystallization temperature, which is in fact the temperature at which the crystallization speed is maximum. This measure is carried out by using the DSC method (differential scanning calorimetry). To this end, the material to be examined is heated up to about 180° C, and thereafter left to cool down. At the beginning, release of the calories is made regularly, and then when crystallization appears again, the amount of calories liberated increases. The temperature at which this liberation of calories is maximum is called crystallization temperature. The materials of the invention have a crystallization temperature of 115° C to 135° C, and it is most often comprised between about 115° C and about 130° C. This temperature depends on the agent which modifies the crystallization speed which has been used, and on the cooling speed adopted (5 to 20° C/min).

Another property of the materials which is particularly interesting is their mechanical resistance, specially their resistance to deformation which, when combined to the rigidity resulting from the high crystallization speed, renders these materials particularly interesting. Starting with sheets of these materials, containers may be produced by thermoforming the sheets, these containers supporting high mechanical strength, these ones being generally not supported by similar articles obtained from expanded polypropylene having a low crystallization speed. The resistance to deformation is determined by the flexural modulus, according to the ASTM D. 790/71 method.

Generally, the materials of the present invention have a flexural modulus which is at least 5 % higher than that of similar materials, of same specific gravity, but prepared from polypropylene the crystallization speed of which being not improved.

From the fact of the existence of a relationship between the value of the flexural modulus (expressed in g'.mm$^{-2}$) of the material and the specific gravity (expressed in g.mm$^{-3}$) of this latter, the ratio flexural modulus/specific gravity is used. With the materials of the invention, this ratio lies between $1.50 \times 10^8$ and $1.70 \times 10^8$ and is the most often comprised between about $1.52 \times 10^8$ and about $1.68 \times 10^8$.

As already mentioned, the materials of the invention are obtained by extrusion of the compositions hereabove described. It has been noted that the use of these compositions leads to an increase of the extrusion rate of about 10 to 15 %, when compared to a similar treatment of a composition based on polypropylene which does not contain any agent which modifies the crystallization speed. On the other hand, various objects may be easily manufactured by thermoforming the obtained sheets made of expanded crystalline polypropylene. That possibility is really surprising, because the state of the art teaches that, in order to thermoform unexpanded crystalline polypropylene, it is necessary to introduce a thermoplastic resin within the polypropylene in order to reduce the crystallization rate.

Moreover, the objects obtained from the compositions of the invention are dimensionally stable, even at the exit of the thermoforming apparatus. On the contrary, articles manufactured from other compositions reach that stability only after an important period of time. Owing to that property and to the increase of the extrusion rate, the production rate of the articles like containers is improved, which latter may be employed immediately.

The following examples will illustrate the features and other advantages of the compositions of the present invention but without limiting its scope.

Example 1

Expanded sheets of 2 mm thickness were prepared by extruding compositions containing polypropylene, and citric acid as blowing agent.

The following grades of polypropylene were used :
- isotactic polypropylene which does not contain any agent improving the crystallization speed (called polypropylene P1);

3

- polypropylene obtained by blending P1 with 0.3 % by weight of a mixture comprising adipic acid and zeolite 4A (weight ratio 1:3), said improved polypropylene being called P2;
- polypropylene obtained by blending P1 with 0.3% by weight of benzilidene sorbitol, said blend being called P3;
- polypropylene obtained by blending P1 with 0.3% by weight of sodium bis(4-tert-butylphenol) phosphate, said blend being called P4;
- polypropylene obtained by blending P1 with either 0.1% or 0.7% by weight of talc, said blends being called P5 and P6 respectively.

Polypropylene P1 and blends P5 and P6 are outside the scope of the present invention and are given only by way of comparison.

The crystallization temperature of the different types of polypropylene has been determined, by first heating them at 180 °C and thereafter by letting them to cool.

For some of them, the determination has been made at different cooling speeds. The obtained results are indicated in Table 1.

### Table 1

| Polypropylene type | Cooling speed (°C/min) | Crystallization temperature(°C) |
|---|---|---|
| P1 | 20 | 103.7 |
| | 10 | 108.2 |
| | 5 | 112.1 |
| P2 | 20 | 122.1 |
| | 10 | 127.4 |
| | 5 | 130.7 |
| P3 | 20 | 115.8 |
| P4 | 20 | 122.7 |
| P5 | 20 | 110.1 |
| P6 | 20 | 112.2 |

With each type of polypropylene, sheets with a density of $6.70 \times 10^{-4}$ g/mm$^3$ ($6.57 \times 10^{-6}$ Newton/mm$^3$), and sheets with a density of $7.10 \times 10^{-4}$ g/mm$^3$ ($6.96 \times 10^{-6}$ Newton/mm$^3$) have been manufactured. These different densities were obtained by using different amounts of blowing agent.

For each sheet, the flexural modulus was determined, in the extrusion direction as well as in the perpendicular direction of the extrusion.

The values given in Table 2 are the mean of these determinations.

4

## Table 2

| Polypropylene type | Density $d$ $10^{-4}$ g/mm$^3$ ($10^{-6}$ N/mm$^3$) | | Flexural Modulus $Mf$ $10^4$ g'/mm$^2$ (N/mm$^2$) | | Ratio $Mf$ / $d$ $10^8$ |
|---|---|---|---|---|---|
| P1 | 6.70 | (6.57) | 9.8 | (958.5) | 1.46 |
|    | 7.10 | (6.96) | 10.4 | (1021.5) | 1.47 |
| P2 | 6.70 | (6.57) | 10.4 | (1023.5) | 1.56 |
|    | 7.10 | (6.96) | 11.9 | (1163.5) | 1.67 |
| P3 | 6.70 | (6.57) | 10.3 | (1012.5) | 1.54 |
|    | 7.10 | (6.96) | 10.8 | (1062.5) | 1.52 |
| P4 | 6.70 | (6.57) | 10.5 | (1025.5) | 1.56 |
|    | 7.10 | (6.96) | 11.9 | (1169) | 1.68 |
| P5 | 6.70 | (6.57) | 9.4 | (922.5) | 1.48 |
|    | 7.10 | (6.96) | 11.1 | (1084.5) | 1.49 |

Example 2

Expanded polypropylene sheets were manufactured from polypropylene P2 and 0.4% by weight of azodicarbonamide as blowing agent.

These sheets had a density $d$ of $6.3 \times 10^{-4}$ g/mm$^3$ ($6.2 \times 10^{-6}$ N/mm$^3$) and a ratio $Mf$ / $d$ of $1.54 \times 10^8$.

The variation of density between different points of the sheet did not exceed 2.2%.

By way of comparison, sheets were prepared according to the same operating conditions, except that polypropylene P1 was used instead of polypropylene P2.

The obtained sheets had a density $d$ of $7.4 \times 10^{-4}$ g/mm$^3$ ($7.3 \times 10^{-6}$ N/mm$^3$) and a ratio $Mf$ / $d$ of $1.48 \times 10^8$.

The variation of density between different points of the sheet reached 7.8%.

Example 3

With the polypropylene compositions of Example 1, expanded polypropylene tubes were manufactured.

The blowing agent which has been used was a mixture of citric acid and sodium bicarbonate in a ratio 5:3.

The density $d$ and the flexural modulus $Mf$ of these tubes were determined (ASTM D.790 method). The results are indicated in the herebelow Table 3.

### Table 3

| Polypropylene type | Density $\underline{d}$ $10^{-4}$ g/mm$^3$ ($10^{-6}$ N/mm$^3$) | | Flexural Modulus $\underline{Mf}$ $10^4$ g'/mm$^2$ (N/mm$^2$) | | Ratio $\underline{Mf}$ / $\underline{d}$ $10^8$ |
|---|---|---|---|---|---|
| P1 | 8.00 | (7.85) | 10.23 | (1003) | 1.28 |
| P2 | 8.00 | (7.85) | 13.02 | (1277) | 1.63 |
| P3 | 6.80 | (6.67) | 10.34 | (1014) | 1.52 |
|  | 6.30 | (6.18) | 9.64 | (945) | 1.53 |
| P4 | 6.70 | (6.57) | 11.05 | (1084) | 1.65 |
| P5 | 7.70 | (7.55) | 11.30 | (1108) | 1.47 |

Example 4

Tubes were prepared from blends of polypropylene P2 and various blowing agents, which are indicated in Table 4.

The following results were obtained, the amount of blowing agent being expressed in % with respect to the weight of polypropylene.

### Table 4

| Blowing agent Type | Amount | Density $\underline{d}$ $10^{-4}$ g/mm$^3$ ($10^{-6}$ N/mm$^3$) | | Flexural Modulus $\underline{Mf}$ $10^4$ g'/mm$^2$ (N/mm$^2$) | | $\underline{Mf}$ / $\underline{d}$ ratio $10^8$ |
|---|---|---|---|---|---|---|
| Azodicar-bonamide | 0.15 | 6.40 | (6.28) | 9.73 | (954) | 1.52 |
| Citric acid/ sodium bicarbonate (wt ratio 5/3) | 0.35 | 4.20 | (4.12) | 6.51 | (638) | 1.55 |
| Citric acid | 0.30 | 5.20 | (5.10) | 8.22 | (806) | 1.58 |

The variation of density between different points of the tubes did not exceed 1.8% while that variation reached an average of 7.2% with tubes manufactured with polypropylene P1.

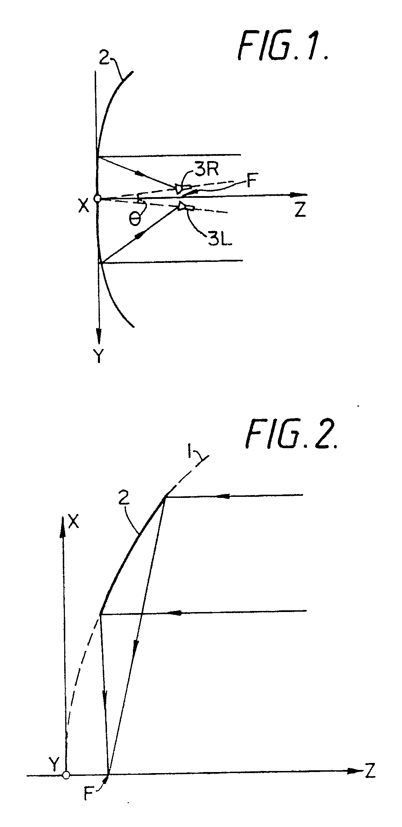

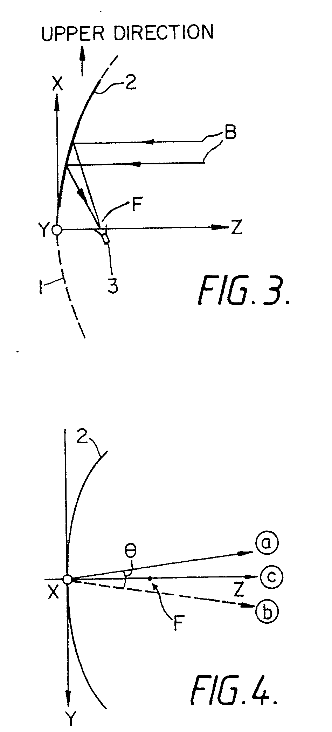

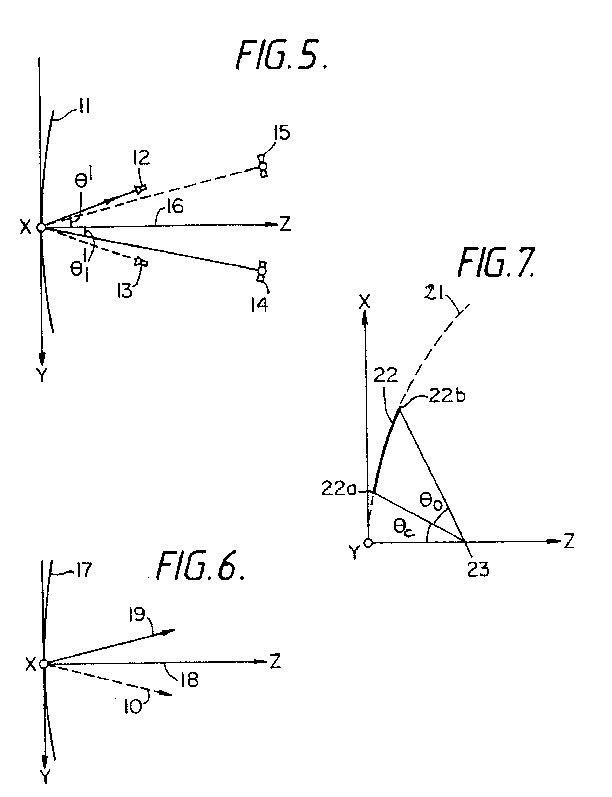

**Claims**

1. Rigid materials made of expanded polypropylene characterized by (i) a uniform specific gravity d comprised between $4.18 \times 10^{-4}$ g/mm³ ($4.1 \times 10^{-6}$ N/mm³) and $8.26 \times 10^{-4}$ g/mm³ ($8.1 \times 10^{-6}$ N/mm³), (ii) a crystallization temperature comprised between 115°C and 135°C, and (iii) a flexural modulus Mf expressed in g'/mm² such that the ratio Mf : d is comprised between $1.50 \times 10^8$ and $1.70 \times 10^8$.

2. Rigid materials according to claim 1, characterized by a crystallization temperature comprised between 115°C and about 130°C.

3. Rigid materials according to claim 1, characterized in that the ratio Mf / d is comprised between about $1.52 \times 10^8$ and $1.68 \times 10^8$.

4. Process for preparing a rigid material made of expanded polypropylene according to claim 1, comprising extrusion of a polypropylene composition containing 0.05 - 0.5 percent by weight of crystallization speed improving agent and 0.2 - 0.7 part by weight of blowing agent by 100 parts by weight of polymer, in addition to optional usual additives and/or nucleating agent.

## Revendications

1. Matériaux rigides en polypropylène expansé, caractérisés par (i) une densité uniforme d comprise entre $4,18.10^{-4}$ g/mm³ ($4,1.10^{-6}$ N/mm³) et $8,26.10^{-4}$ g/mm³ ($8,1.10^{-6}$ N/mm³), (ii) une température de cristallisation comprise entre 115°C et 135°C et (iii) un module de flexion Mf exprimé en g'/mm² tel que le rapport Mf/d est compris entre $1,5.10^8$ et $1,7.10^8$.

2. Matériaux rigides selon la revendication 1, caractérisés par une température de cristallisation comprise entre 115°C et 130°C.

3. Matériaux rigides selon la revendication 1, caractérisés par leur rapport Mf/d compris entre environ $1,52.10^8$ et $1,68.10^8$.

4. Procédé de préparation d'un matériau rigide fait en polypropylène expansé selon la revendication 1, comprenant l'extrusion d'une composition de polypropylène contenant de 0,05 à 0,5% en poids d'un agent améliorant la vitesse de cristallisation et de 0,2 à 0,7 partie en poids d'un agent gonflant par 100 parties en poids de polymère en plus des éventuels additifs habituels et/ou agent nucléant.

## Patentansprüche

1. Starre Materialien aus expandiertem Polypropylen, gekennzeichnet durch (i) ein gleichmäßiges spezifisches Gewicht d, das zwischen $4,18 \times 10^{-4}$ g/mm³ ($4,1 \times 10^{-6}$ N/mm³) und $8,26 \times 10^{-4}$ g/mm³ ($8,1 \times 10^{-6}$ N/mm³) liegt, (ii) eine Kristallisationstemperatur, die zwischen 115°C und 135°C liegt, und (iii) einen Biegemodul Mf, ausgedrückt in g'/mm², so daß das Verhältnis Mf : d zwischen $1,50 \times 10^8$ und $1,70 \times 10^8$ liegt.

2. Starre Materialien nach Anspruch 1, gekennzeichnet durch eine Kristallisationstemperatur, die zwischen 115°C und etwa 130°C liegt.

3. Starre Materialien nach Anspruch 1, dadurch gekennzeichnet, daß das Verhältnis Mf / d zwischen etwa $1,52 \times 10^8$ und $1,68 \times 10^8$ liegt.

4. Verfahren zur Herstellung eines starren Materials aus expandiertem Polypropylen nach Anspruch 1, durch Extrudieren einer Polypropylenzusammensetzung, die 0,05 - 0,5 Gewichtsprozent eines die Kristallisationsgeschwindigkeit verbessernden Mittels und 0,2 - 0,7 Gewichtsteile eines Treibmittels auf 100 Gewichtsteile Polymer zusätzlich zu wahlweisen üblichen Zusätzen und/oder einem Nukleierungsmittel enthält.

# FIG.1.

# FIG.2.

FIG. 3.

FIG. 4.

FIG.5.

FIG.7.

FIG.6.